# EUROPEAN PATENT APPLICATION

(11) **EP 0 534 663 A2**
(43) Date of publication of application: **31.03.1993**
(21) Application number: 92308383.6
(22) Date of filing: 15.09.1992
(51) Int. Cl.: F04F 1/02, F04F 1/14

(54) **Method, system and apparatus for transferring fluids**

(30) Priority: 26.09.1991 JP 274537/91; 26.09.1991 JP 274538/91; 17.12.1991 JP 353459/91; 01.05.1992 JP 139691/92
(71) Applicant: ARIAKE CERAMIC CONSTRUCTIONS CO., LTD., Atsugi-shi, Kanagawa (JP)
(72) Inventor: Aigami, Kyoji, Kamimachi-Heights Room 202, Sagamihara-shi, Kanagawa (JP)
(74) Representative: Waldren, Robin Michael

(57) **Abstract**

A method, system and apparatus that may be used for transferring a fluid such as molten metal, pure water, chemical liquid, and the like are disclosed. None of the functional mechanical parts or elements such as mechanical valves that require the mechanical motions, i.e., rotary, sliding, or other like motions are not included, and the fluid transferring and/or branching functions are instead implemented.

The fluid transfer apparatus includes a fluid storing chamber, an air inlet/outlet means connected to the upper end of the fluid storing chamber, an inlet pipe having its open upper end connected to one lateral wall of the fluid storing chamber and having its open bottom end extending into the fluid being transferred through which the fluid is drawn into the fluid storing chamber by decreasing the pressure in the fluid storing chamber, and a U-shape outlet pipe through which the drawn fluid in the fluid storing chamber is transferred by increasing the pressure in the fluid storing chamber, wherein a part of the drawn fluid is allowed to remain in the U-shape outlet pipe when the pressure in the fluid storing chamber is decreased, and the other hand a part of the drawn fluid is further allowed to remain in the bottom end of the inlet pipe when the pressure in the fluid storing chamber is increased.

## Description

### BACKGROUND OF THE INVENTION

### Field of the Invention

The present invention relates to a method, system and apparatus that are directed toward the transfer of fluids, particularly molten metal, or other fluids such as pure water, chemical liquids and the like.

### Description of the Prior Art

Typically, the conventional transfer of molten metal, for example, from the dissolving furnace to the intermediate storing furnace or casting metal mold occurs in the following manner. First, the dissolving furnace is inclined, or the tap hole (which is provided on the lateral wall near the furnace bottom and may be temporarily closed by clay or any other covering means) is opened by removing the covering means, allowing the molten metal therein to be delivered into the ladle. Then, the ladle is carried by human labor or transferred by using the fork lift toward the storing furance or casting metal mold where the ladle is inclined, allowing the molten metal therein to be poured into the storing furnace or metal mold. Generally, those operations involve the human labor, which causes some problems including the heavy human labor or labor intensive environment, the non-comfortable working environment, and the potential exposure to any physical dangers. During those operations, the ladle is normally opened, and the molten metal in the ladle may have been cooled, may have been oxidized on the surface, or may have been exposed to any other external factors that may affect the molten metal, before the ladle can reach the destination such as the casting metal mold.

Recently, a pumping system that includes some mechanical parts made of ceramics has been used for the transfer of molten metal, although it is still on the experimental stage. Such pumping system includes functional mechanical parts, such as blades, pistons, shafts, bearings, valves, and the like, that may be exposed to the high temperature molten metal which may erode those mechanical parts which have been treated anticorrosively. The mechanical parts cannot be functional under such severe conditions. Those mechanical parts may also be damaged or worn under those conditions, and cannot provide the service for the extended period of time. As an alternative, an electromagnetic pumping system that operates on the known Fleming law is proposed. This electromagnetic pump system must have the complicated mechanism, and must be physically large in order to meet the requirements for transferring the high-temperature molten metal. So that the physical areas in which it can be used are thus restricted. It must also be costly. Functionally, it is less reliable when the amount of molten metal that it can handle is considered, and it cannot serve the general-purpose use.

When other fluids, such as the pure water or any other chemical liquid, that should not contain any impurities are transferred, the pump or valve system that also includes functional mechanical parts is used. When any of such fluids is being transferred, it may inevitably make contact with the moving portions of those mechanical parts. Those mechanical parts may also become worn as they age, resulting in producing foreign matter which may be introduced into the fluid. In such pump or valve system using those mechanical parts, the fluid path may have undulations (highs and lows) on the surface which prevent the smooth flow of the fluid. The conventional pump or valve system that includes the mechanical parts and is specifically designed for transferring the pure water, chemical liquids or the like have the disadvantages as described.

The applicant of the present invention has proposed the method and apparatus to eliminate the problems described above in connection with the prior art. Such method and apparatus were described in Japanese Patent Application No. 2-316971 filed on November 21, 1990 which was laid open to public inspection under the publication No. 4-187366 on July 6, 1992. Japanese Patent Application No. 2-316971 is the prototype of the present invention. The method and apparatus of Japanese Patent Application are described by the aid of Figs. 1 to 3 for facilitating the understanding of the present invention. According to this prototype, the apparatus generally shown by 7 includes a fluid storing chamber 1, an inlet pipe 2 having its open upper end 11 extending into the lateral side of the fluid storing chamber 1, and an outlet pipe 3 extending from the bottom of the fluid storing chamber 1 and having its open upper end connected to an exit port 4. An air inlet/outlet conduit 6 extends into the top of the fluid storing chamber 1 and connected thereto through a valve 5, the other end of the air inlet/outlet conduit 6 leading to a pressure regulator means (not shown).

For use, the apparatus may be placed into the fluid 8. When the valve 5 is opened, allowing the air in the atmosphere to be drawn into the fluid storing chamber 1, the fluid that has been introduced into the fluid storing chamber 1 will have its level 10 in flush with the level 9 of the fluid 8 which is usually placed under the atmospheric pressure. By placing the fluid storing chamber 1 into the fluid 8 so deeply that the open upper end 11 of the inlet pipe 2 can be located below the level 9 of the fluid 8, the fluid 8 can automtically be introduced into the fluid storing chamber 1 up to the level 9 simply by placing the fluid storing chamber 1 under the atmospheric pressure. Thus, the level 10 can be brought in flush with the level 9.

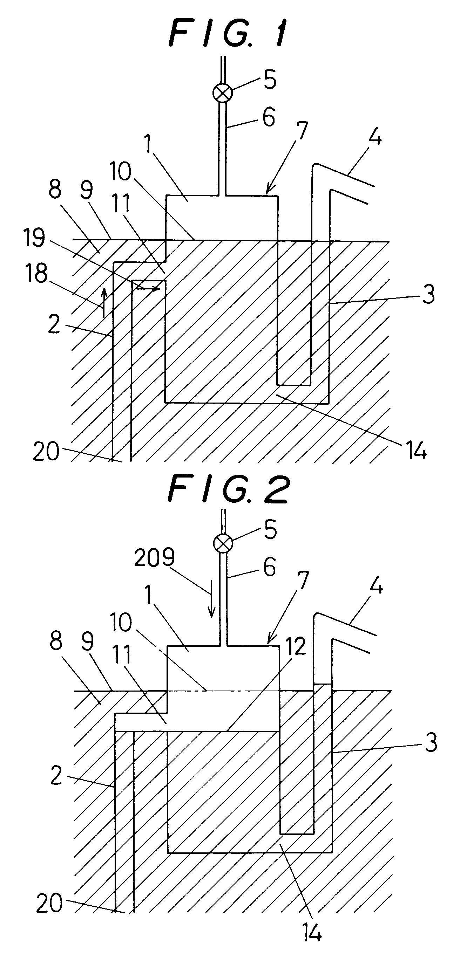

Then, air is delivered into the fluid storing chamber 1 from the air inlet/outlet conduit 6 in the direction of an arrow 209 as shown in Fig. 2, placing the fluid storing chamber 1 under the increased pressure. The applied pressure inside the fluid storing chamber 1 is increased until the level 10 of the fluid can be brought down to the level 12 as shown, which is in flush with the lower edge of the opening 11, at which time nearly all of the fluid portion that has existed between the old level 10 and the new level 12 will be going down through the inlet pipe 2, while the level of the fluid portion existing in the outlet pipe 3 will be raised slightly.

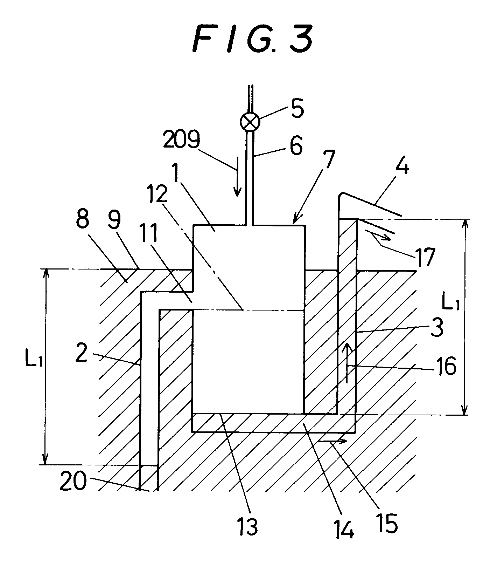

As the applied pressure inside the fluid storing chamber 1 is increased further until the level of the fluid inside the chamber 1 can be brought down to the level 13 as shown in Fig. 3 where the upper edge of the opening 14 is located, the fluid portion that has existed between the old level 12 and the new level 13 will move toward the outlet pipe 3, rising toward the exit port 4 as indicated by arrows 15, 16, 17 in Fig. 3. In this way, the exact amount of the fluid that has existed between the old level 12 and the new level 13 inside the fluid storing chamber 1 can be moved. The total cubic volume of the fluid storing chamber 1, the cubic volume of the portion of the chamber 1 that covers between the two levels 12 and 13, and the total cubic volume through the outlet pipe 3 may be specified when the fluid transfer apparatus 7 is designed. As those parameters have the respective specific values, the location where the opening 11 of the inlet pipe 2 is connected may be adjusted, and the cubic volume of the portion of the fluid storing chamber 1 covering the area between the old level 12 and the new level 13 may be adjusted accordingly. In this way, the accurate amount of fluid as required can be delivered through the exit port 4 to the next following stage. The inventors of the current application made the experiments by using the molten metal as the fluid, and have found that any errors in transferring the amount of fluid as required can be controlled within 2 %.

Then, the applied pressure is removed from the fluid storing chamber 1, restoring it to the original atmospheric pressure state. This causes the fluid 8 to flow through the inlet pipe 2 and then its opening 11 into the fluid storing chamber 1 as indicated by arrows 18, 19 in Fig. 1, and the chamber 1 returns to its original state as shown in Fig. 1.

By repeating the procedure as described above, that is, by first placing the fluid storing chamber 1 under the applied pressure, and then by restoring it to the atmospheric pressure state, the amount of fluid 8 as required can be delivered through the exit port 4 to the next following stage.

When the fluid storing chamber 1 is in the state as shown in Fig. 3, the pressure prevailing in the chamber 1 is the pressure under which the fluid 8 can be raised by the height of L1. This pressure is sufficient to move the fluid toward the exit port 4. As the open upper end of the outlet pipe 3, that is, the exit port 4 is placed under the atmospheric pressure state when the fluid storing chamber 1 is in the state as shown in Fig. 3, the prevailing pressure in the chamber 1 is the pressure under which the fluid 8 under the atmospheric pressure can be raised by the distance equal to the height of L1. In the state in Fig. 3, therefore, the level of the fluid portion that exists in the inlet pipe 2 can be depressed from the level 9 by the distance of L1 in the direction of the height. From this, the length of the inlet pipe 2 must be such that its open bottom end 20 is located by at least the depth of L1 below the level 9. If this requirement is not met, the air may go out from the open bottom end 20 of the inlet pipe 2 before the state in Fig. 3 can be reached, and the fluid portion that has existed between the old level 12 and the new level 13 in the fluid storing chamber 1 cannot be moving any more before all has completely moved toward the outlet pipe 3. This prevents the exact amount of fluid from being moved.

As the before described, Japanese Patent Application No. 2-316971 can eliminate the problems of the prior art as before described since the method and apparatus described in said application eliminate the use of the mechanical parts, such as blades pistons, shafts, bearings, valves.

However, the method and apparatus described in Japanese Patent ApplicationNo. 2-316971 includes a fluid storing chamber which must be disposed in a fluid being transferred by the operation of said method and apparatus. So that the areas in which said method and apparatus can be used are thus restricted.

The inventor of the present invention invented the present invention using the idea of Japanese Patent Application No. 2-316971 in order to provide the method, system and apparatus for transferring fluid which can eliminate the problems of the prior art as before described and can be used in any areas.

### SUMMARY OF THE INVENTION

The present invention eliminates the problems described above in connection with the prior art by providing a method, system and apparatus for transferring a fluid such as molten metal, pure water, chemical liquid and the like. The fluid transfer apparatus that may be used in conjunction with the fluid transfer method and system according to the present invention eliminates the use of all mechanical parts, such as blades, pistons, shafts, bearings, valves and the like, which must be operated mechanically for providing the rotary, sliding, and other motions. The apparatus according to the invention is based upon the concept that is completely different from that of the prior art apparatus.

In one preferred embodiment according to the fluid transfer method of the present invention includes the steps to decrease a pressure in a fluid storing chamber which is disposed outside a fluid to be transferred by removing a gas from the fluid storing chamber through a gas inlet and outlet pipe, and to draw the fluid into the fluid storing chamber through a fluid inlet pipe having its open bottom end extending into the fluid by taking advantage of the decreased pressure in the fluid storing chamber, and then to increase a pressure in the fluid storing chamber by supplying a gas into the fluid storing chamber through the gas inlet and outlet pipe, and to transfer said drawn fluid through a U-shape outlet pipe from the fluid storing chamber by taking advantage of the increased pressure in the fluid storing chamber. In this embodiment, a part of said drawn fluid is allowed to remain in the U-shape outlet pipe when the pressure in the fluid storing chamber is decreased, and the other hand a part of said drawn fluid is further allowed to remain in the bottom end of the fluid inlet pipe when the pressure in the fluid storing chamber is increased.

The fluid transfer system according to the present invention includes a group of several fluid transfer units arranged at regular intervals and connected in series with each other by means of a fluid delivery conduit, each unit including a first upright pipe open at the bottom end and having its upper end connected to a pressure reducing means, and a second upright pipe connected to the first upright pipe by means of a connecting pipe, the pressure reducing means providing the siphon action under which the fluid is transferred from the first upright pipe toward the second upright pipe, thereby allowing the fluid to be transferred toward the desired place. The fluid transfer system further includes a second group of several fluid transfer units arranged in parallel with the first group of fluid transfer units such that each unit in the second group corresponds to each unit in the first group, thereby permitting the fluid to be branched from each unit in the second group.

In one preferred embodiment, the fluid transfer apparatus according to the present invention includes a fluid storing chamber, an inlet pipe having its open upper end connected to one lateral wall of the fluid storing chamber and having its open bottom end extending into the fluid being transferred, a U-shape pipe including a first longitudinal pipe portion having its open upper end connected to the bottom of the fluid storing chamber and a second opposite longitudinal pipe portion having its open upper end connected to a fluid delivery conduit, and an air inlet/outlet means connected to the upper end of the fluid storing chamber, wherein said first longitudinal pipe portion of said U-shape pipe connected to the bottom of the fluid storing chamber has a specific length extending in the direction of its height, and the length of said second longitudinal pipe portion of the U-shape pipe in the direction of its height and the length of said inlet pipe in the direction of its height below the level of the fluid is defined to have a specific relationship. In this case, the length L3 of the first longitudinal pipe portion of the U-shape pipe in the direction of its height is defined to satisfy the relation of L2 < L3, when the length L2 in the direction of the height from the level of the fluid into which the bottom end of the inlet pipe is disposed to the level of the drawn fluid within the fluid storing chamber when the fluid is drawn into it by reducing the pressure therein is given. Furthermore, the above specific relationship between the length of the second longitudinal pipe portion of the U-shape pipe in the direction of its height and the length in the direction of the height of the inlet pipe below the fluid level is such that the length in the direction of the height of the inlet pipe below the fluid level is more than L4, when the difference L4 in the height of the fluid levels between the first and second longitudinal pipe portions of the U-shape pipe is given when the pressure inside the fluid storing chamber is increased.

In a further preferred embodiment, a fluid transfer apparatus comprising a plurality of fluid transfer units, each unit includes a first upright pipe open at its bottom end and having the upper end connected to a pressure reducing means, and a second upright pipe connected to the first upright pipe by means of a connecting pipe. In this embodiment, a first group of such fluid transfer units are arranged at regular intervals, and each unit is connected to another by means of a fluid delivery pipe. In this arrangement, a second group of fluid transfer units arranged in parallel with a specific one or ones of said plurality of fluid transfer units, and fluid flow branching pipes are coupled with said second group of fluid transfer units.

In a further preferred embodiment, the fluid transfer apparatus includes a fluid storing chamber having its upper end connected to a pressure supply means, a first U-shape pipe having one open upper end connected to a fluid delivery conduit and having the opposite open upper end connected to the lateral wall of the fluid storing chamber, and a second U-shape pipe having one open upper end connected to the bottom of the fluid storing chamber and having the opposite open upper end connected to a fluid container, wherein it further includes a third U-shape pipe interposed between the second U-shape pipe and the fluid container, and an air inlet/outlet pipe connected to the connection between the third U-shape pipe and second U-shape pipe.

According to the present invention, the fluid transfer apparatus or each individual fluid transfer unit that may be configured in the system may be provided without the need of using any of the mechanical functional parts, such as blades, pistons, shafts, bearings, valves and so on, that are essential in the prior art apparatus, and the fluid transfer system may be configured to include such units.

In the fluid transport method and apparatus, the fluid can be drawn into the fluid storing chamber through the inlet pipe whose bottom end is located in the fluid, when the pressure within the fluid storing chamber is reduced, while the fluid within the fluid storing chamber can be moved through the U-shape outlet pipe by increasing the pressure within the fluid storing chamber. In this case, the fluid can remain in the U-shape outlet pipe when the pressure within the fluid storing chamber is reduced, thereby allowing the fluid to be drawn through the inlet pipe into the fluid storing chamber, while the fluid can remain at the bottom end of the inlet pipe when the pressure within the fluid storting chamber is increased, and then can be moved forward through the U-shape outlet pipe. It may be understood that when the pressure within the fluid storing chamber is reduced, the portion of the fluid that has remained in the U-shape outlet pipe can provide the function of a plug that controls the movement of the fluid, while when the pressure within the fluid storing chamber is increased, the portion of the fluid that has remained at the bottom end of the inlet pipe can also provide the function of the plug. In either case, the fluid portion that functions as the plug provides the equivalent action of the mechanical valve, which can thus be eliminated. In this way, the fluid transfer apparatus can be comprised of the fluid storing chamber, inlet pipe, outlet pipe, U-shape pipe, and the other elements mentioned above, instead of using the functional mechanical parts in the prior art apparatus. This arrangement allows for the use of materials such as ceramics, carbon and the like for those component elements for which the shaping or working out is usually difficult. The fluid transfer apparatus including the component parts of ceramics, carbon and the like, and the fluid transfer system configured to include several units of such apparatus can be used under the severe conditions in which the transfer of molten metal must take place at high temperatures As there are no mechanical functional parts such as the valves, there is no risk that any dusts that would be produced from the operating valves that may contact the fluid will be introduced into the fluid being transferred. As the fluid that has entered or has been drawn into the fluid storing chamber can be transferred by increasing the pressure therein, the amount of the fluid to be transferred can be controlled easily and accurately by adjusting the volume of the fluid storing chamber or by adjusting the pressures to be applied therein.

The fluid transfer system according to the present invention may be configured to include several units of the fluid transfer apparatus described above, each unit comprising the first upright pipe having its open bottom end disposed into a fluid and its upper end connected to the pressure reducing means, and the second upright pipe connected to the first upright pipe by means of the connecting pipe, wherein the pressure reducing means may be operated to provide the siphon action under which the fluid can be transferred from the first upright pipe to the second upright pipe. Each individual fluid transfer unit that is configurable in the system may also be comprised of those parts as described above, rather than the mechanical functional parts in the prior art apparatus. Those individual units may be arranged at regular intervals, and may be interconnected by means of a fluid delivery conduit so that the fluid can be transferred from one unit to another. It may be understood, therefore, that the fluid can be transferred to any appropriate location without requiring any human intervention. As none of those mechanical functional parts are included in each individual unit, there is no risk that any dusts that would otherwise be produced from the operating valves, etc. will be introduced into the fluid being transferred by this transfer system. Each individual unit configurable in the fluid transfer system and which provides the siphon action may be arranged in parallel. This permits the same amount of fluid to be branched and transferred under the same pressure to several different destinations concurrently.

According to the fluid transfer method, system and apparatus of the present invention, the fluid can be transferred in the hermetically closed environment. Thus, in the case where molten metal is to be transferred, it will be protected against any oxidation that may be caused by any exposure to the air in the atmosphere. Also, according to the fluid transfer system of the present invention, the molten metal can be transferred to the several molding machines at the constant temperature concurrently.

### BRIEF DESCRIPTION OF THE DRAWINGS

Those and other objects, features, and advantages of the present invention will become apparent from the detailed description of several preferred embodiments that follows herein by referring to the accompanying drawings, in which:
Fig. 1 is a sectional view schematically illustrating the fluid transfer apparatus according to the prototype of the present invention, with some parts thereof not shown;
Fig. 2 is a sectional view schematically illustrating the apparatus of Fig. 1 with some parts thereof not shown, in which the pressure is being increased;
Fig. 3 is a sectional view schematically illustrating the apparatus of Fig. 1 with some parts thereof not shown, in which the pressure has completely been increased;
Fig. 4 is a sectional view schematically illustrating the fluid transfer apparatus according to the present invention, with some parts thereof not shown, in which the pressure is being reduced;
Fig. 5 is a sectional view schematically illustrating the apparatus of Fig. 4 with some parts thereof not shown, in which the pressure is being increased;
Fig. 6 is a sectional view schematically illustrating the fluid transfer apparatus in another embodiment of the present invention, with some parts thereof not shown, in which the pressure is being reduced;
Fig. 7 is a sectional view schematically illustrating the apparatus of Fig. 6 with some parts thereof not shown, in which the pressure is being increased;
Fig. 8 is a front view schematically illustrating the pipe connections in the fluid transfer system according to the present invention;
Fig. 9 is a plan view of the system of Fig. 8;
Fig. 10 is a front view illustrating the operation of the system of Fig. 8;
Fig. 11 is a front view illustrating the fluid flow branching operation of the system of Fig. 8;
Fig. 12 is a front view illustrating another variation of the system of Fig. 8;

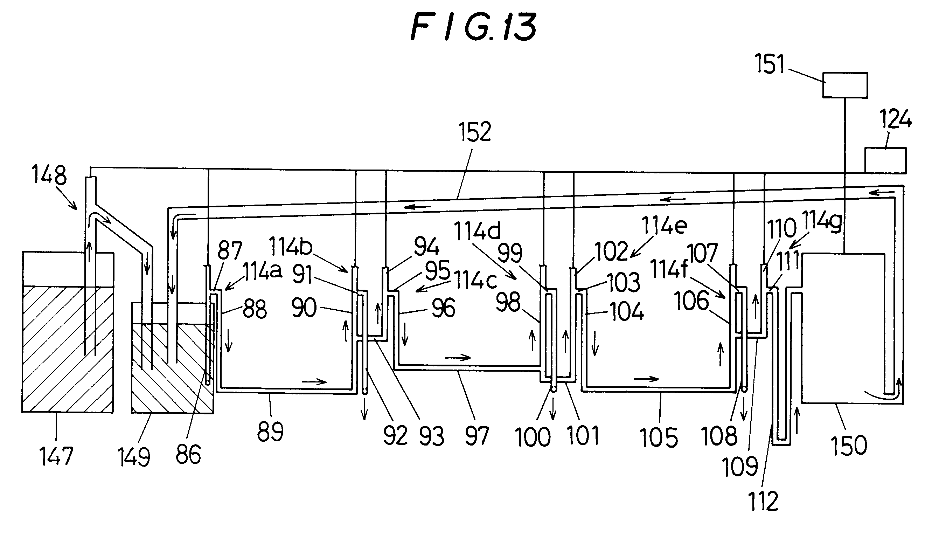

Fig. 13 is a front view illustrating one example of using the system of Fig. 8;
Fig. 14 is a front view illustrating a further variation of the system of Fig. 8;
Fig. 15 is a plan view of Fig. 14;
Fig, 16 is a sectional view schematically illustrating another embodiment of the fluid transfer apparatus according to the present invention, with some parts thereof not shown;
Figs. 17 and 18 are sectional views schematically illustrating the operation of the apparatus of Fig. 16;
Fig. 19 is a sectional view schematically illustrating a further embodiment of the fluid transfer apparatus according to the present invention;
Figs. 20 and 21 are sectional views illustrating the operation of the apparatus of Fig. 19; and
Fig. 22 is a sectional view of another variation of the apparatus of Fig. 19, with some parts thereof not shown.

### DESCRIPTION OF THE PREFERRED EMBODIMENTS

### EXAMPLE 1

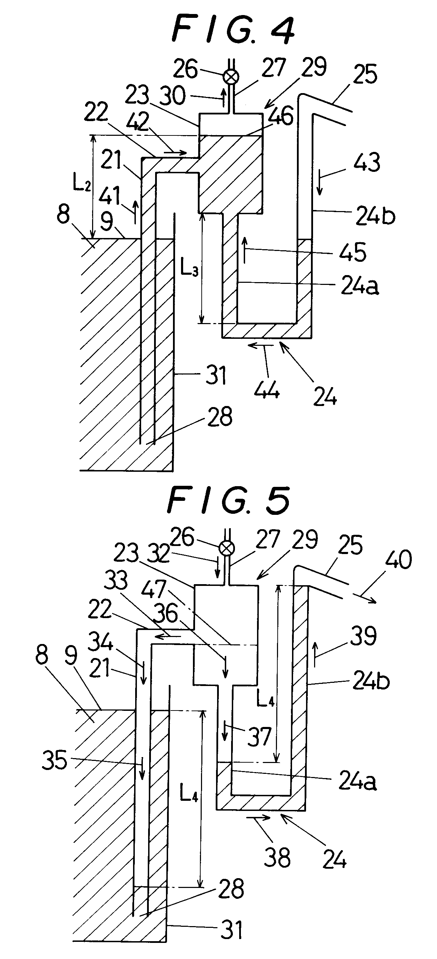

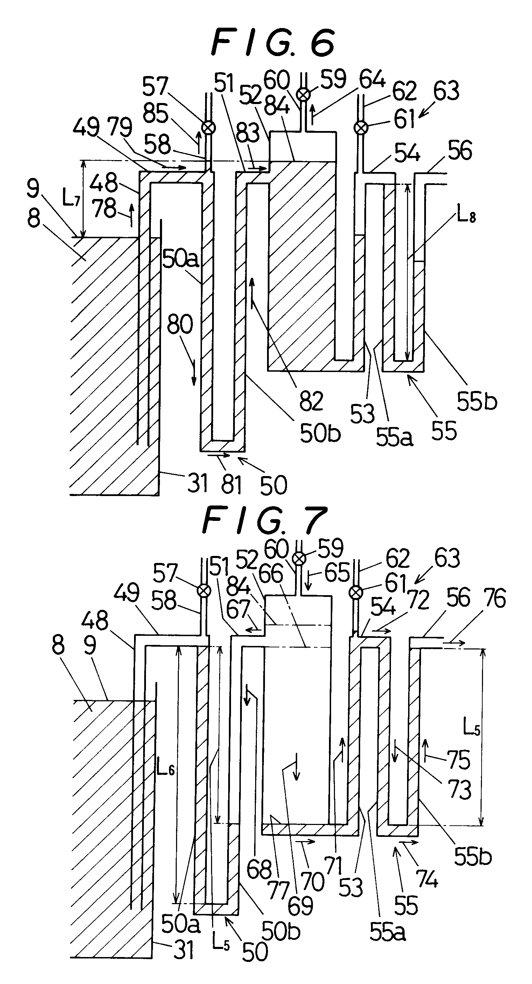

Referring next to Figs. 4 and 5, a first preferred embodiment of the fluid transfer apparatus is described. The apparatus 29 includes a fluid storing chamber 23, and an inlet pipe 21 having its open bottom end inserted into the fluid 8 and having its open upper end extending through a connecting pipe 22 into the lateral side of the fluid storing chamber 23. It further includes a U-shape pipe 24 having one longitudinal pipe portion 24a extending into the bottom of the fluid storing chamber 23 and having the opposite longitudinal pipe portion 24b extending toword an exit port 25. An air inlet/outlet pipe 27 is connected through a valve 26 to the top of the fluid storing chamber 23, and its opposite end is connected to a pressure regulator means (not shown).

As shown in Fig. 4, the air in the fluid storing chamber 23 may be removed through the air inlet/outlet pipe 27 as indicated by an arrow 30, and the pressure inside the fluid storing chamber 23 may be reduced, drawing the fluid from the fluid container 31 into the fluid storing chamber 23. As shown in Fig. 5, the air is then introduced through the air inlet/outlet pipe into the fluid storing chamber 23 as indicated by an arrow 32, placing the fluid storing chamber 23 under the applied pressure. Nearly all of the portion of fluid that has been drawn into the chamber 23 up to the level above where the connecting pipe 22 is connected to the chamber 23 is then falling through the inlet pipe 21 as indicated by arrows 33, 34, 35 toward the fluid container 31. The portion of fluid that has occupied the area below the level where the connecting pipe 22 is connected to the chamber 23 (the fluid portion that has existed below the line shown by the broken lines 47 in Fig. 5) is then depressed as indicated by an arrow 36, and is moving through the U-shape pipe 24 as indicated by arrows 37, 38, 39 toward the exit port 25 from which it is delivered to the next following stage as indicated by an arrow 40. Fig. 5 shows that the fluid has been removed through the exit port 25 from the fluid storing chamber 23 under the applied pressure.

Referring back to Fig. 4, the air in the fluid storing chamber 23 is again removed through the air inlet/outlet pipe 27 as indicated by the arrow 30, reducing the pressure inside the chamber 23. Then, the fluid is again drawn from the fluid container 31 into the inlet pipe 21 and then through the connecting pipe 22 into the chamber 23 as indicated by the arrow 42. When the fluid storing chamber 23 is in the state as shown in Fig. 5, any fluid that remains in the U-shape pipe 24 is also exposed to the atmospheric pressure on the side of the exit port 25, and is then moving as indicated by arrows 43, 44, 45 when the pressure inside the chamber 23 is reduced as shown in Fig. 4. Part of that fluid which remained in the U-shape pipe 24 as shown in Fig. 5 is drawn into the fluid storing chamber 23 as indicated by arrows 43, 44, 45 in Fig. 4.

By increasing and reducing the pressure in the fluid storing chamber 23 alternately according to the above procedure and by repeating the procedure, the fluid in the fluid container 31 can be moved to the next following stage. According to this embodiment, the total cubic volume of the fluid storing chamber 23, the cubic volume of the fluid portion existing below the line indicated by the broken lines 47 in the chamber 23, and the total cubic volume of the U-shape pipe 24 may be determined when the apparatus is designed, and those parameters have their specific values. The amount of the fluid to be removed from the exit port 25 can be controlled accurately by adjusting the location where the connecting pipe 22 is connected to the chamber 23 and the degree of the pressure to be applied.

In Fig. 4, the pressure inside the fluid storing chamber 23 is reduced to the extent that the level 9 of the fluid 8 under the atmospheric pressure can be raised up to the height as shown by the level 46. In Fig. 4, therefore, given that the length in the direction of the height between the level 9 and the level 46 is L2, and the length in the direction of the height of the longitudinal portion 24a of the U-shape pipe 24 is L3, L2 and L3 should have the relatioship of L2 < L3. The exit port 25 is exposed to the atmospheric pressure in the same way as the level 9 of the fluid 8 is, so that if L2 > L3 when the pressure inside the fluid storing chamber 23 is reduced, air will be drawn from the atmosphere through the longitudinal pipe portion 24b into the longitudinal pipe portion 24a, depressing the level of fluid in the pipe portion 24b. This will cause the air to be introduced through the U-shape pipe 24 into the fluid storing chamber 23, and the fluid 8 cannot be drawn from the fluid container 31 into the fluid storing chamber 23 under the reduced pressures In contrast, when the pressure inside the fluid storing chamber 23 is reduced to allow the fluid 8 to be drawn from the fluid container 31 into the chamber 23 if L2 < L3, the fluid portion that exists in the U-shape pipe 24 will function as a plug that prevents the air from the atmosphere from entering through the exit port 25.

It is shown in Fig. 5 that the pressure inside the fluid storing chamber 23 is increased to the extent that the level of the fluid in the U-shape pipe 24 can be raised up to the location where the exit port 25 is located. Under this pressure, the fluid under the atmospheric pressure is brought up by the distance equal to the height of L4 in Fig. 5, while at the same time, the level of the fluid in the inlet pipe 21 is brought down by the distance equal to the height L4 relative to the level 9 of the fluid 8 in the fluid container 31. This is because the fluid 8 is also placed under the atmospheric pressure. It may be understood that the inlet pipe 21 should be long enough so that the length in the direction of the height of the portion located below the level 9 is at least more than L4. If this requirement is not met, the air in the inlet pipe 21 will be removed from its open bottom end 28 before the state in Fig. 5 can be reached, and the fluid that should go from the fluid storing chamber 23 through the U-shape pipe 24 toward the exit port 25 cannot be moving any more before the amount of fluid as required can be removed from the exit port 25. When the fluid storing chamber 23 is in the state shown in Fig. 5, the fluid portion that remains in the bottom end side of the inlet pipe 21 will function as a plug that prevents the air fed from the air inlet/outlet pipe 27 as indicated by an arrow 32 for increasing the pressure in the chamber 23 from escaping through the open bottom end 28 of the inlet pipe 21.

In this embodiment, the apparatus may be running under the environment in which it is hermetically sealed, and any inert gas such as nitrogen gas may be used under that environment, rather than the atmosphere air to which the surface 9 of the fluid 8 may be exposed or which goes out of and into the fluid storing chamber 23 through the air inlet/outlet pipe 27. Thus, when the fluid being transferred is the molten metal, its surface can be prevented from any possible oxidation that might occur if it is exposed to the air in the atmosphere.

### EXAMPLE 2

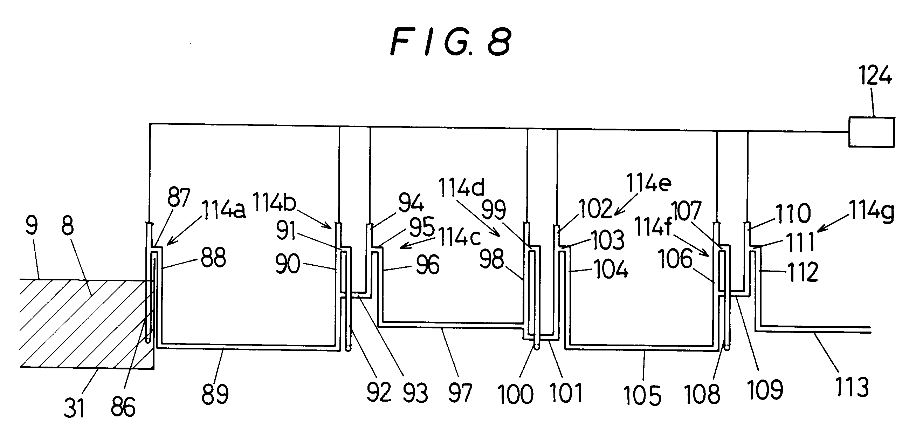

Referring to Figs. 6 and 7, another preferred embodiment of the fluid transfer apparatus is described. The apparatus, generally designated by 63, includes a fluid storing chamber 52, and an inlet pipe 48 having its open bottom end extending into the fluid 8 and having its open upper end connected through a connecting pipe 49 to the open upper end of one longitudinal pipe portion 50a of a first U-shape pipe 50. The U-shape pipe 50 has the opposite longitudinal pipe portion 50b whose open upper end extends through a connecting pipe 51 into the lateral side of the fluid storing chamber 52. The apparatus further includes an outlet pipe 53 having its open bottom end extending into the bottom of the fluid storing chamber 52, and having its open upper end connected through a connecting pipe 54 to the open upper end of one longitudinal pipe portion 55a of a second U-shape pipe 55, which has the opposite longitudinal pipe portion 55b having its open upper end connected to an exit port 56. The connecting pipe 49 is connected to an air inlet/outlet pipe 58 through a valve 57 on the upstream side of the connecting pipe 49. The air inlet/outlet pipe 58 is connected to a pressure regulator means (not shown). Another air inlet/outlet pipe 60 extends into the top of the fluid storing chamber 52 through a valve 59, and has its opposite end connected to a pressure regulator means (not shown). The connecting pipe 54 is connected to a further air inlet/outlet pipe 62 through a valve 61 on the upstream side of the connecting pipe 54.

It may seen from Fig. 6 that the air is removed from the fluid storing chamber 52 through the air inlet/outlet pipe 60 as indicated by an arrow 64, placing the chamber 52 under the reduced pressure and then drawing the fluid 8 from the fluid container 31 into the chamber 52 until the fluid reaches the level as shown by 84 therein. At the same time, the air is removed through the air inlet/outlet pipe 58 as indicated by an arrow 85, producing the reduced pressure as in the fluid storing chamber 52. This reduced pressure is substantially equal to that for the chamber 52. While the pressure inside the fluid storing chamber 52 is being reduced, the valve 61 remains closed so that no air can move through the air inlet/outlet pipe 62.

Then, air is drawn from the atmosphere into the fluid storing chamber 52 through the air inlet/outlet pipe 60 as indicated by an arrow 65. This increases the pressure inside the chamber 52 (Fig. 7). Nearly all of the fluid portion that has been raised up to level above where the connecting pipe 51 extends into the fluid storing chamber 52 when it is placed under the reduced pressure (in Fig. 7, that portion that has existed between the two broken lines 84 and 66) will go through the connecting pipe 51 and down through the longitudinal pipe portion 50b as indicated by arrows 67, 68. At the same time, the fluid portion that has existed below the level where the connecting pipe 51 is connected (in Fig. 7, that fluid portion that has existed below the line indicated by the broken lines 66) will be depressed as indicated by an arrow 69, going through the outlet pipe 53, the connecting pipe 54 and then the U-shape pipe 55 as indicated by arrows 70, 71, 72, 73, 74, 75 and finally going out of the exit port 56 as indicated by an arrow 76. It may be seen from Fig. 7 that the fluid portion in the fluid storing chamber 52 has been depressed down to the level 77 under the applied pressure, and has completely been removed through the exit port 56. While the pressure inside the fluid storing chamber 52 is being increased, the valve 61 remains closed so that no air can move through the air inlet/outlet pipe 62. On the other hand, while the pressure inside the fluid storing chamber 52 is being increased, the valve 57 remains open, permitting the air to be moved through the air inlet/outlet pipe 58. The process to stop the pressure reduction operation through the combination of the valve 57 and air inlet/outlet pipe 58, and then to open the valve 57 may occur immediately prior to switching from the reduced pressure state to the increased pressure state in the fluid storing chamber 52. After the pressure reduction operation is stopped, followed by opening the valve 57, air is immediately drawn through the air inlet/outlet pipe 58, and the fluid portion that has existed in the connecting pipe 49 in the state as shown in Fig.6 is dropped down toward the fluid container 31. Then, the pressure is increased in the fluid storing chamber 52, with the air existing in the portion of the inlet pipe 48 above the level 9 as well as in the connecting pipe 49 as shown in Fig. 7. If the pressure is increased in the fluid storing chamber 52 while the reduction operation is continued through the valve 57 and air inlet/outlet pipe 58, instead of doing in the above manner, the fluid portion will move toward the air inlet/outlet pipe 58 at once. The pressure reduction operation is stopped, but if the pressure is increased in the fluid storing chamber 52 with the valve 57 remains closed, the fluid portion that has been raised above the location where the connecting pipe 51 extends into the fluid storing chamber 52, the fluid portion in the connecting pipe 51, the fluid portion in the U-shape pipe 50, the fluid portion in the connecting pipe 49, and the fluid portion existing above the level 9 in the inlet pipe 48 as shown in Fig. 6 will all at once be drawn back into the fluid container 31 under the siphon action.

When the valve 57 is opened to admit air through the air inlet/ outlet pipe 58 into the connecting pipe 49 and the portion of the inlet pipe 48 above the level 9 before the pressure is increased in the fluid storing chamber 52, causing the fluid portion existing in the connecting pipe 49 in the state shown in Fig. 6 to move down toward the fluid container 31 and the fluid portion in the U-shape pipe 50 to stay there. So the fluid portion remaining in the U-shape pipe 50 will function as a plug that prevents the air which fed through the air inlet/outlet pipe 60 into the fluid storing chamber 52 from escaping out of the chamber 52 through the U-shape pipe 50.

At this time, the fluid storing chamber 52 is placed under the pressure that is sufficient to keep the fluid therein over the area covering the height L5 from the level 77 up to the connecting pipe 54 and exit port 56. (In this embodiment, the connecting pipe 54 and exit port 56 have the same height levels. If the connecting pipe 54 and exit port 56 have the different height levels, the height L5 is the distance up to whichever of the two is the higher.) As the exit port 56 is placed under the atmospheric pressure state, the pressure in the fluid storing chamber 52 may be increased up to the pressure that can raise the fluid 8 under the atmospheric pressure by the distance of the height L5. The fluid portion remaining in the first U-shape pipe 50 and functioning as the plug is placed under the atmospheric pressure on the side of its longitudinal pipe portion 50a, so that the fluid level in the longitudinal pipe portion 50b is depressed. The difference in the height of the level between those longitudinal pipe portions 50b and 50a is equal to the distance represented by the height L5 (Fig. 7).

The valve 61 remains closed while the pressure in the fluid storing chamber 52 is being increased. The valve 61 is opened instantaneously when the reduced pressure in the chamber 52 is switched to the increased pressure, and is then reclosed. In this way, the air that has existed in the upper end of the outlet pipe 53 and in the connecting pipe 54 in the state shown in Fig. 6 is thus removed instantaneously through the air inlet/outlet pipe 62. After the air that has existed in the upper end of the outlet pipe 53 and in the connecting pipe 54 in the state shown in Fig. 6 has been removed in that way, the pressure in the fluid storing chamber 52 may continue to be increased. Under the increased pressure, the fluid can move smoothly as indicated by arrows 70, 71, 72, 73, 74 and 75. As the switching of the valve 61 from its open state to its reclosed state is in an instant moment, the air that has existed in the upper end of the outlet pipe 53 and in the connecting pipe 54 in the state shown in Figs 6 may not completely be removed, and some air may remain there. This remaining air may become small bubbles while the fluid is moving, and those small air bubbles may exist in the fluid moving through the connecting pipe 54.

Next, the increased pressure is released, and the air is removed through the air inlet/outlet pipe 60 as indicated by an arrow 64, reducing the pressure in the fluid storing chamber 52, at the same time the pressure reduction through the valve 57 and air inlet/outlet pipe 58 is operated as indicated by an arrow 85, the fluid storing chamber 52 returns to the state as shown in Fig. 6. Thus, the fluid 8 in the fluid container 31 is drawn through the inlet pipe 48, connecting pipe 49, U-shape pipe 50, and connecting pipe 83 into the fluid storing chamber 52, as indicated by arrows 78, 79, 80, 81, 82 and 83. At the beginning of the pressure reduction process through the valve 57 and air inlet/outlet pipe 58, the air that has existed in the upper end of the inlet pipe 48 and in the connecting pipe 49 in the state as shown in Fig. 7 is removed through the air inlet/outlet pipe 58. By removing the air in this way, the fluid can move smoothly as indicated by arrows 78, 79, 80, 81, 82 and 83 in Fig. 6.

As described earlier, while the fluid storing chamber 52 is placed under the reduced pressure, the valve 61 remains closed so that the air cannot flow through the air inlet/outlet pipe 62. The valve 61 is opened instantaneously when the increased pressure in the chamber 52 is switched to the reduced pressure, and is then reclosed. In this way, air is drawn through the air inlet/outlet pipe 62 instantaneously, and the fluid portion that has existed in the connecting pipe 54 and outlet pipe 53 in the state as shown in Fig. 7 is moving toward the fluid storing chamber 52 in an instant, and air is then drawn into the upper end of the outlet pipe 53 and into the connecting pipe 54. Thus, the pressure in the fluid storing chamber 52 is being reduced in the state in which the air exists in the upper end of the outlet pipe 53 and in the connecting pipe 54. If the pressure in the fluid storing chamber 52 is switched from the increased pressure to the reduced pressure without switching the valve 61 from its open state to its reclosed state instantaneosly, the fluid portions existing in the outlet pipe 53, connecting pipe 54 and U-shape pipe 55 as shown in Fig. 7 will instantly move back into the fluid storing chamber 52 under the siphon action.

When the fluid storing chamber 52 is switched from the increased pressure to the reduced pressure, at the same time the valve 61 is opened momentarily, and is then reclosed. In this way, the pressure in the fluid storing chamber 52 is being reduced in the state in which the air exists in the upper end of the outlet pipe 53 and in the connecting pipe 54, so that the fluid portion in the U-shape pipe 55 remains while the pressure in the chamber 52 is being reduced. The fluid portion that remains in the U-shape pipe 55 during the pressure reducing process in the chamber 52 will function as a plug that prevents air from entering through the exit port 56 into the fluid storing chamber 52. At this time, the fluid storing chamber 52 is placed under the reduced pressure under which the fluid can be drawn into the fluid storing chamber 52 up to the level 84 from the level 9 of the fluid 8 in the fluid container 31 which is placed under the atmospheric pressure. That is, the reduced pressure is equal to the pressure that causes the difference in height between the levels 9 and 84. As the level of the fluid portion in the longitudinal pipe portion 55b is placed under the atmospheric pressure at the side of exit port 56 as the level 9 of the fluid 8 in the fluid container 31 is, the difference in the height between the levels in the longitudinal pipe portions 55a, 55b may therefore also be equal to the difference in the height between the levels 9 and 84, as seen from the state in Fig. 6.

As described above, the fluid portions remaining in the first U-shape pipe 50 and second U-shape pipe 55 provide the plug functions when the pressure in the fluid storing chamber 52 is increased or reduced. In order to provide the respective plug functions for those fluid portions, the lengths in the direction of the heights, represented by L5, L6, L7, L8 in Figs. 6 and 7, must have the relationship of L5 < L6 AND L7 < L8, where L5 represents the distance in the direction of the height of whichever of the connecting pipe 54 and exit port 56 is the higher relative to the level 77 when the pressure in the fluid storing chamber 52 is being increased until the fluid therein has been depressed to the level 77, L6 represents the distance in the direction of the height of the longitudinal pipe portion 50a of the first U-shape pipe 50, L7 represents the distance in the direction of the height between the level 9 of the fluid 8 in the fluid container 31 and level 84 when the pressure in the fluid storing chamber 52 is being reduced until the fluid therein has been raised to the level 84, and L8 represents the distance in the direction of the height of the longitudinal pipe portion 55a of the second U-shape pipe 55. In this specific embodiment, the connecting pipe 54 and the exit port 56 have the same height level, therefore, L5 = L8.

The fluid transfer apparatus described above in connection with the second embodiment is based on basically the same principle of operation as those in the preceding embodiment, and the reasons why L5, L6, L7 and L8 must have the relationships as defined herein have already been explained. To avoid the redundancy, therefore, no further description in those respects is provided.

In this embodiment, the apparatus may also be running under the environment in which it is hermetically sealed, and any inert gas such as nitrogen gas may be used under that environment, rather than the atmosphere air to which the surface 9 of the fluid 8 may be exposed, which moves through the air inlet/outlet pipes 58 and 62 or which goes out of and into the fluid storing chamber 52 through the air inlet/outlet pipe 6. Thus, when the fluid being transferred is the molten metal, its surface can be prevented from any possible oxidization that might occur if it is exposed to the air in the atmosphere.

### EXAMPLE 3

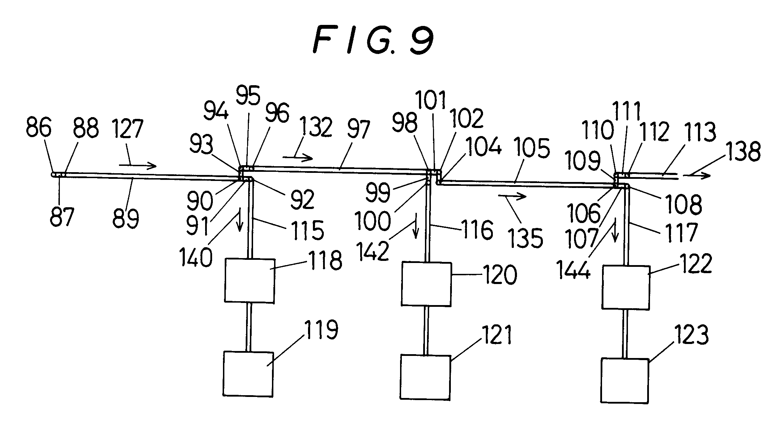

Referring next to Figs. 8 and 9, the fluid transfer system according to the present invention is described. The fluid transfer system includes a first upright pipe 86 having its open bottom end extending into the fluid 8 in a fluid container 31 and having its upper end connected to a pressure reducing means 124, and a second upright pipe 88 connected to the first upright pipe 86 through a connecting pipe 87. The connecting pipe 87 is located slightly above the level 9 of the fluid 8 in the fluid container 31. The bottom end of the second upright pipe 88 is coupled with one end of a first fluid delivery pipe 89 whose opposite end is coupled with the bottom end of a third upright pipe 90. The upper end of the third upright pipe 90 is connected to the pressure reducing means 124. The third upright pipe 90 is connected through a further connecting pipe 91 to the upper end of a fourth upright pipe 92 whose bottom end is coupled with another fluid delivery pipe 115 (Fig. 9). The third upright pipe 90 is coupled with the bottom end of a fifth upright pipe 94 through a second fluid delivery pipe 93. The upper end of the fifth upright pipe 94 is coupled with the pressure reducing means 124. The fifth upright pipe 94 is connected through a connecting pipe 95 to the upper end of a sixth upright pipe 96, whose bottom end is coupled with one end of a third fluid delivery pipe 97 whose opposite end is coupled with the bottom end of a seventh upright pipe 98. The upper end of the seventh upright pipe 98 is connected to the pressure reducing means 124. The seventh upright pipe 98 is coupled through a connecting pipe 99 with the upper end of an eighth upright pipe 100 whose bottom end is coupled with a fluid delivery pipe 116 (Fig. 9). The seventh upright pipe 98 is connected through a fluid delivery pipe 101 to the bottom end of a ninth upright pipe 102 whose upper end is coupled with the pressure reducing means 124. The ninth upright pipe 102 is coupled through a connecting pipe 103 with the upper end of a tenth upright pipe 104 whose bottom end is connected to one end of a fifth fluid delivery pipe 105 whose opposite end is coupled with the bottom end of an eleventh upright pipe 106 whose upper end is connected to the pressure reducing means 124. The eleventh upright pipe 106 is connected through a connecting pipe 107 to the upper end of a twelfth upright pipe 108 whose bottom end is connected to a fluid delivery pipe 117 (Fig. 9). The eleventh upright pipe 106 is coupled through a sixth fluid delivery pipe 109 with the bottom end of a thirteenth upright pipe 110 whose upper end is connected to the pressure reducing means 124. The thirteenth upright pipe 110 is coupled through a connecting pipe 111 with the upper end of a fourteenth upright pipe 112 whose bottom end is coupled with one end of a seventh fluid delivery pipe 113 whose opposite end is coupled with the bottom end of the next following upright pipe, and so on. Any subsequent connections for the upright pipes, connecting pipes, fluid delivery pipes, and the like may be performed in the above sequence.

It may be understood from the above description that each of the upright pipes 86, 90, 94, 98, 102, 106, and 110 has its respective upper end connected to the pressure reducing means 124. The pressure reducing means 124 may be operated under control of the automatic or manual controller system.

As seen from Fig. 8, a pair of the upright pipes 86, 88 comprises a fluid transfer unit 114a, a pair of the upright pipes 90, 92 comprises a fluid transfer unit 114b, a pair of the upright pipes 94, 96 comprises a fluid transfer unit 114c, and other subsequent pairs of upright pipes comprise fluid transfer units 114d, 114e, 114f, 114g and so on, respectively (when those fluid transfer units are referred to later, they will be referred collectively to as the fluid transfer unit 114a, except for those specifically mentioned ). The fluid transfer units 114b, 114d, and 114f are specifically assigned to provide the flow branching functions. As seen from Fig. 9, the upright pipes 92, 100, and 108 have their respective open bottom ends coupled through the fluid transfer unit 118 to a second fluid container 119, through the fluid transfer unit 120 to a third fluid container 121, and through the fluid transfer unit 122 to a fourth fluid container 123, respectively.

Those fluid transfer units 114a, etc. may be arranged at any intervals, and one fluid transfer unit should be located at every flow branching point.

The fluid container 31 comprises a fluid storing chamber which contains the fluid to be transferred. For example, when molten metal is to be transferred, the storing chamber may comprise a storing furnace that holds the molten metal that has been transferred from the dissolving furnace. The second, third, and fourth fluid containers 119, 121, 123 may be used for processing the fluid being transferred, or for utilizing the fluid being transferred. For example, in the case of pure water or chemical liquids being transferred, those fluid containers may comprise the fluid utility units, and for the molten metal, they may comprise the molding machines such as casting metal mold.

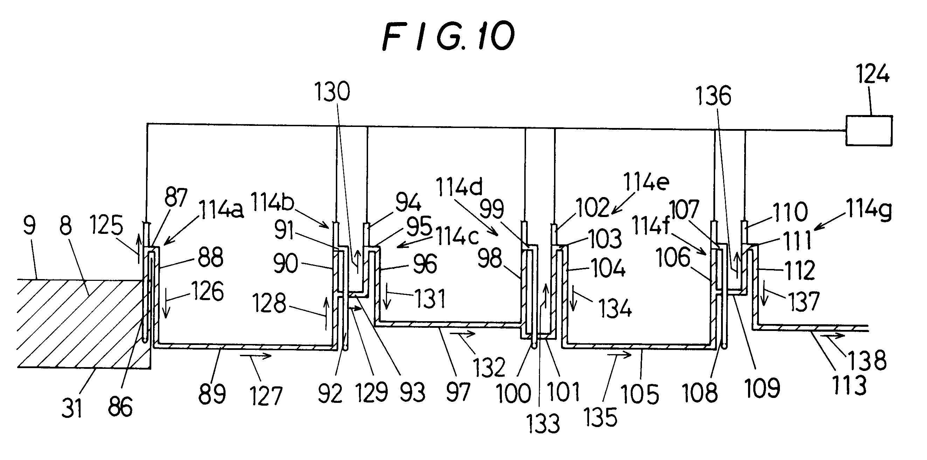

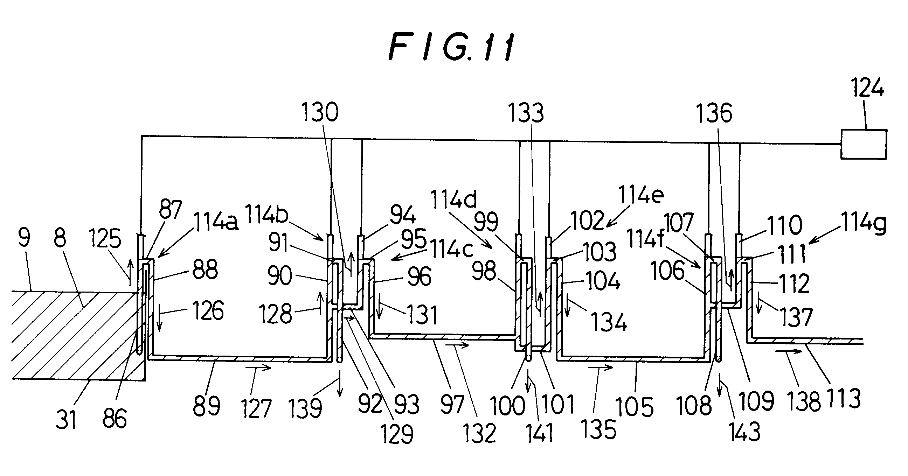

The operation of the fluid transfer system is described by referring to Figs. 10 and 11. In this embodiment, each individual fluid transfer unit provides the siphon action under which the fluid is transferred from one unit to another. When the pressure reducing means 124 coupled with the upper end of the first upright pipe 86 is first operated, the air is removed from the upper end of the upright pipe 86, which is then placed under the pressure below the atmospheric pressure. As the level 9 of the fluid 8 in the fluid container 31 is now under the atmospheric pressure, the resulting differential pressure causes the fluid 8 to be rising through the upright pipe 86 as indicated by an arrow 125. The fluid that has reached the connecting pipe 87 passes through the connecting pipe 87, going to the second upright pipe 88 through which the fluid is going down as indicated by an arrow 126, passing through the first fluid delivery pipe 89 and then going up through the third upright pipe 90 and through the fourth upright pipe 94 as indicated by arrows 127, 128, 129 and 130. The pressure reducing means 124 provides the reduction in the pressure that can maintain this state. The fluid 8 in the fluid container 31 continues to go out until the level 9 is going down to the open bottom end of the upright pipe 86 under the siphon action. Then, the fifth upright pipe 94, the ninth upright pipe 102, and the thirteenth upright pipe 110 are also placed under the reduced pressure by the pressure reducing means 124, and the fluid is moving through the succeeding fluid transfer units as indicated by arrows 131, 132, 133, 134, 135, 136, 137, 138, and so on.

It may be understood that when the connecting pipes 87, 95, 103, and 111 are provided at the same height, the first upright pipe 86, the fifth upright pipe 94, the ninth upright pipe 102, and the thirteenth upright pipe 110 may be placed under substantially the same reduced pressure by the pressure reducing means 124. In this way, the fluid can move smoothly.

It should be noted that the fluid delivery pipes 89, 93, 97, 101, 105, 109, and 113 may be provided at any height if it is lower than the corresponding connecting pipes. Although it is shown and described that each of the fluid delivery pipes is connected to the bottom end of each corresponding upright pipe, the location where the respective connection is made may be varied to any other appropriate location.

It should also be noted that in starting the fluid transferring system, the fluid 8 should previously have been drawn into the fluid delivery pipes 89, 97, 105, and 113.

It has been described so far that the fluid 8 is transferred from the fluid container 31 to a single particular location. According to another feature of the present invention, the fluid 8 may be transferred in equal quantities to several locations at the same time. This will be described below with the aid of Fig. 11. When transferring the fluid as described above, the third upright pipe 90, the seventh upright pipe 98, and the eleventh upright pipe 106 are also placed under the reduced pressure by the pressure reducing means 124 as for the other upright pipes. Then, the fluid is falling through the upright pipe 92 as indicated by an arrow 139, and is transferred to the fluid transfer unit 118 as indicated by an arrow 140 in Fig. 9. Similarly, the fluid is falling through the eighth upright pipe 100 as indicated by an arrow 141, and is transferred to the fluid transfer unit 120 as indicated by an arrow 142 in Fig. 9. For the twelfth upright pipe 108, the fluid is falling as indicated by an arrow 143, and is transferred to the fluid transfer unit 122 as indicated by an arrow 144 in Fig. 9. As there are the fluid transfer units 114b, 114d, and 114f which are specifically assigned to provide the flow branching functions, some part of the fluid may be transferred as indicated by arrows 127, 132, 135, 138 in Fig. 9, while the remaining part of the fluid may be branched to three different paths as indicated by arrows 140, 142, 144.

In the fluid transfer system according to the present invention, the flows of the fluid portions branched to the three different paths as indicated by arrows 140, 142, 144 may be delivered under equal pressures as well as in equal quantities. Thus, the flow branching functions can be implemented without using any functional mechanical parts or devices such as the three-way valve in the prior art apparatus.

As described earlier, the fluid transfer units 114a, etc. may be arranged at any intervals, it is preferable to arrange the fluid transfer units 114a, etc. at the side of those fluid transfer units 114b, 114d, 114f that are assigned to provide the flow branching functions may be arranged. This arrangement provides the smooth fluid transfer.

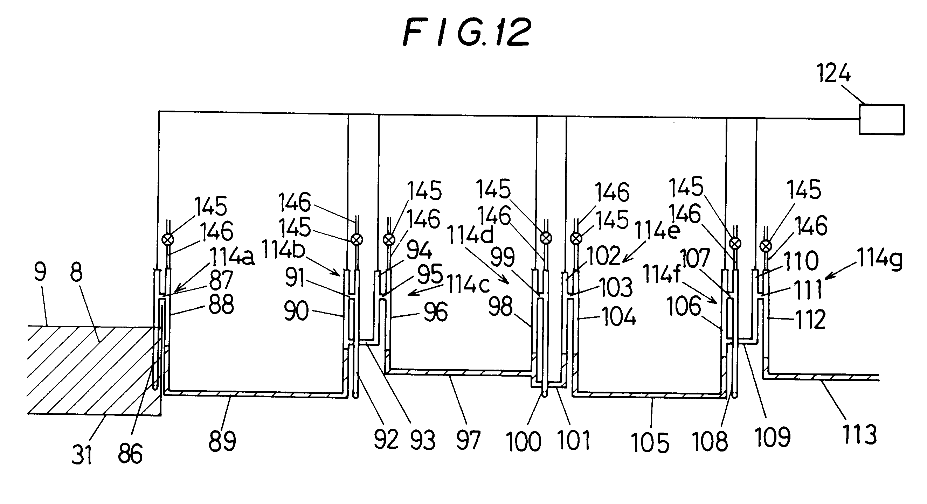

Fig. 12 illustrates a variation of the fluid transfer system described in connection with the preceding embodiment shown in Fig. 8. The system in Fig. 12 differs from the system in Fig. 8 in that the second upright pipe 88, the fourth upright pipe 92, the sixth upright pipe 96, the eighth upright pipe 100, the tenth upright pipe 104, the twelfth upright pipe 108, and the fourteenth upright pipe 112 have their respective upper ends connected with their respective air inlet/outlet pipe 146 through their respective valves 145. According to the fluid transfer system in Fig. 8, when the pressure reducing means 124 is stopped, and the system operation is then terminated, the fluid portions that have then existed in the upright pipes, connecting pipes, and fluid delivery pipes will move all at once. After the operation is terminated, therefore, no fluids will remain in the fluid delivery pipes 89, 97, 105, 113, etc. When the operation is restarted, it will be necessary to add the fluid to those pipes in advance.

According to the embodiment shown in Fig. 12, the valve 145 remains closed so that the air through the air inlet/outlet pipe 146 cannot move, while the fluid is being transferred. Thus, the valve 145 and air inlet/outlet pipe 146 have no effect upon the transfer of the fluid. They have the positive effect when the system is not operational. When the pressure reducing means 124 is stopped, and the system operation is then stopped, the valve 145 is opened to allow the air to be drawn through the air inlet/outlet pipe 146, so that the fluid can remain in each of the fluid delivery pipes 89, 97, 105, 113, etc. This eliminates the need of adding the fluid to those fluid delivery pipes in advance, when the system operation is restarted.

### EXAMPLE 4

Next, one example of using the fluid transfer system according to the present invention for transferring the fluid is described from the perspective of the total system. Similar parts are referenced by similar numbers or symbols in Figs. 8 and 9.

The fluid, such as molten metal, from the dissolving furnace 147 is transferred by the fluid transport unit 148 to the holding furnace 149. The fluid transfer unit 148 provides the siphon function as described for the fluid transfer unit 114a, etc. in the preceding embodiment. Under the siphon action, the molten metal may be transferred. For this purpose, the fluid transfer unit 148 is connected to the pressure reducing means 124. When the molten metal is transferred by the fluid transfer unit 114a, etc. from the holding furnace 149, it is branched by the intemediate fluid transfer units 114b, 114d, and 114f on the way, going to a return pump 150. The return pump 150 is connected back to the holding furnace 149 by means of a return conduit 152. The return pump 150 operates on the same principle on which the fluid transfer apparatus in the embodiments 1 through 2 operates, and has its upper end coupled with a pressure supply means 151. The portion of the molten metal from the holding furnace 149 that has not been branched and transferred to the return pump 150 will be returned to the holding furnace 149 by the action of the return pump 150 for re-transfer therefrom. The molten metal may be transferred from the dissolving furnace 147 to the holding furnace 149 in each quantity that corresponds to the quantity of molten metal that exists in the holding furnace 149.

The fluid transfer units and system described in connection with the embodiments 3 and 4 may be used for transferring molten metal, pure water, or other chemical liquids. Each individual unit in the system includes no functional mechanical parts, such as the valves, rotary pumps, and the like, that are operating during the transfer of those fluids. If those parts exist in the units and system, those parts may make contact with the fluids being transferred, and may become worn, producing foreign matter such as metal dusts that may be introduced into the fluids. In contrast, there is no such risk in accordance with the present invention. Further, the units or system of the present invention may be running under the hermetically closed environment, and any inert gases that may contact with the fluids being transferred may be used. Thus, the fluids such as molten metal can be protected against any possible oxidization that may occur when making contact with the ambient air.

### EXAMPLE 5

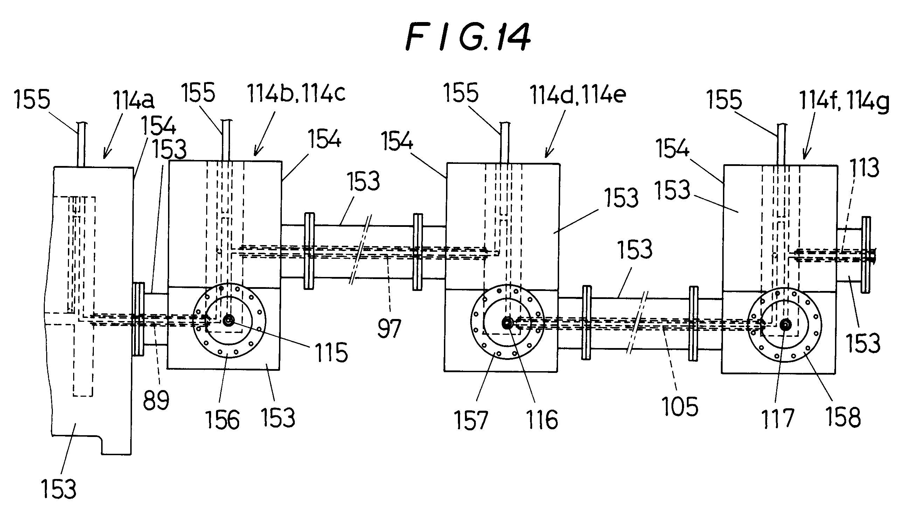

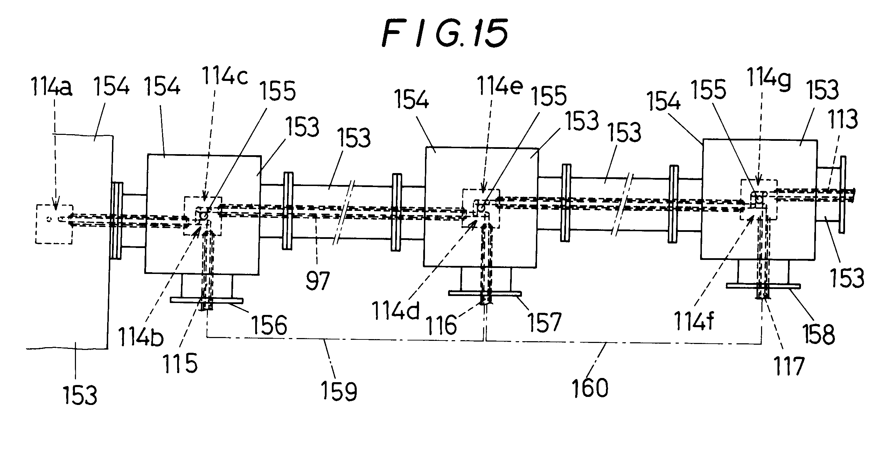

Referring to Figs. 14 and 15, a preferred embodiment of the fluid transfer system described in the embodiments 3 and 4 in which they are specifically designed for transferring molten metal is described.

The fluid transfer system described in the embodiments 3 and 4 may be running under the hermetically closed environment in which molten metal can be transferred. In the system, any inert gases such as nitrogen gas may be used in the areas where molten metal is exposed to the ambient air. Thus, molten metal can be protected against any possible oxidization that usually occurs upon contact with the ambient air in the prior art method and apparatus. Furthermore, in this embodiment, the system that may conveniently be used for transferring molten metal at the constant temperature from the dissolving furnace through the holding furnace or directly to several destinations where the molding machines are located will also be described.

Figs. 14 and 15 illustrate a variation of the system shown in Figs. 8 and 9 that has been improved to transfer molten metal at the constant temperature, including some similar parts as found in Figs. 8 and 9 which are referenced by corresponding similar numbers.

Fluid delivery pipes 89, 97, 105, 113 are covered with thermally insulating material 153, and if necessary, the thermally insulating material may incorporate a thermal source. A fluid transfer unit 114a includes a tower 154 in which the thermally insulating material 153 is filled, and the tower 154 covers the unit 114a. If required, the tower 154 may also incorporate a thermal source. A pair of fluid transfer units 114b, 114c also includes a tower 154 in which the thermally insulating material 153 is filled, and the tower 154 covers the pair of the units 114b, 114c. Similarly, if required, the tower 154 may also incorporate a thermal source. Each of the succeeding pairs of units includes a tower 154 and a thermally insulating material 153 in the similar manner. Numeral 155 refers to a conduit leading to the pressure reducing means 124. Branch pipes 115, 116, 117 extending from the respective fluid transfer units 114b, 114d, 114f assigned to provide the flow branching functions are coupled with the respective molding machines through the respective flanges 156, 157, 158. Those units may be connected as shown by dash-dot lines 159, 160 in Fig. 15 to provide bypassing paths for the fluid delivery pipes 97 and 105. Those bypassing paths may be used if any or all of the fluid delivery pipes should fail, and the molding machines can continue to operate.

According to the present invention, provision is made for ensuring that molten metal can be transferred at a constant temperature. When the molten metal is aluminum, it can be transferred at the constant temperature of approximately 840°C. In the system according to this embodiment, the molten metal can be transferred from the dissolving furnace through the holding furnace or directly to several destinations such as the molding machines at the constant temperature. Therefore, using the system of the invention eliminates the problems of the prior art apparatus and method wherein it is difficult to handle the molten metal at the constant temperature, and therefore to provide uniformity in the product quality. Furthermore, it is possible to distribute molten metal at the constant temperature among several molding machines at the same time.

### EXAMPLE 6

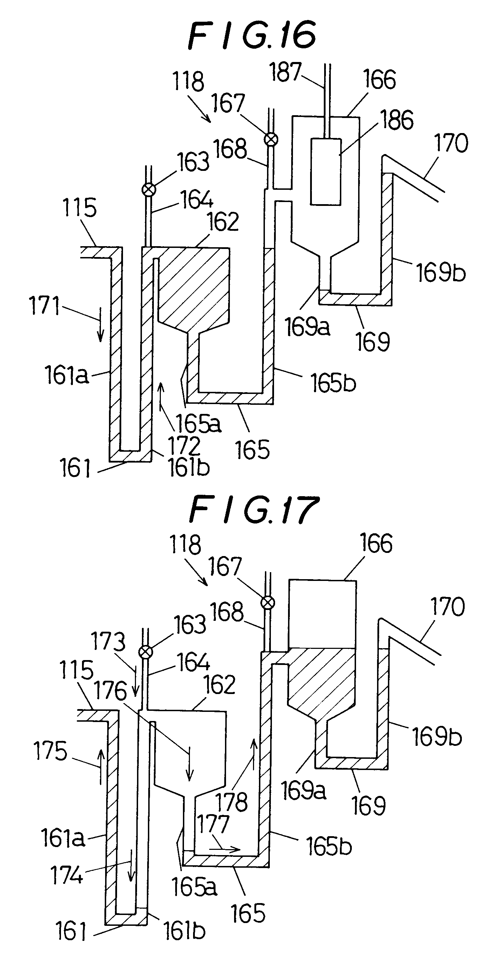

Figs. 16, 17 and 18 shows the fluid transfer system described in the embodiment 3 wherein the flow of the fluid branched by the fluid transfer unit 114b is transferred through the fluid transfer unit 118 to the second fluid container 119.

As seen from Fig. 16, the fluid storing chamber 162 has its upper end located below the connecting pipe of the fluid transfer unit 114b. So the flow of the fluid branched from the fluid transfer unit 114b automatically goes through the U-shape pipe 161 into the fluid storing chamber 162 as indicated by arrows 171, 172 until it fills the chamber 162. As the flow is entering the fluid storing chamber 162, the valve 163 remains open, allowing air to move through the air inlet/outlet pipe 164 freely. Fig. 16 shows that the fluid fills the fluid storing chamber 162.

Then, the air through the air inlet/outlet pipe 164 is drawn into the fluid storing chamber 162 as indicated by an arrow 173, increasing the pressure therein (Fig. 17). As the pressure is increasing in the chamber 162, the valve 167 remains open, allowing the air through the air inlet/outlet pipe 168 to move freely. The fluid in the U-shape pipe 161 has the level depressed as indicated by an arrow 174 on the side of the longitudinal pipe portion 161b, and the level raised as indicated by an arrow 175 on the side of the longitudinal pipe portion 161a. In the state at this point of time, the fluid is forced back toward the fluid transfer unit 114b, while the fluid in the fluid storing chamber 162 is depressed as indicated by an arrow 176, going through the U-shape pipe 165 into the fluid storing chamber 166 as indicated by arrows 177, 178 as shown in Fig. 17.

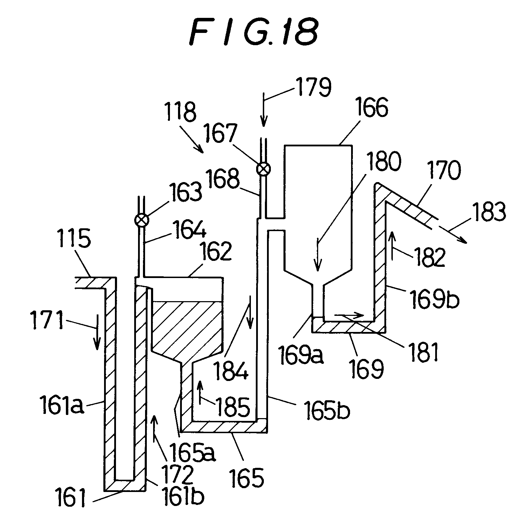

Then, the valve 163 is opened, allowing the air through the air inlet/outlet pipe 164 to move freely. At the same time, the air goes through the air inlet/outlet pipe 168 into the fluid storing chamber 166 as indicated by an arrow 179, increasing the pressure in the chamber 166 (Fig. 18). Fig. 17 shows the state just before the valve switching of the valve 163 and air supply through air inlet/outlet pipe 168 occur. Then, as seen from Fig. 18, the fluid in the fluid storing chamber 166 is depressed as indicated by an arrow 180, going through the U-shape pipe 169 as indicated by arrows 181, 182 and then going out through the exit port 170 as indicated by an arrow 183. At this point of time, the valve 163 is opened, allowing the air through the air inlet/outlet pipe 164 to move freely so that the fluid in the longitudinal pipe portion 165b of the U-shape pipe 165 is depressed as indicated by an arrow 184 while the fluid in the longitudinal pipe portion 165a is raised as indicated by an arrow 185, part of which is entering the fluid storing chamber 162. As the valve 163 is in its open state, as described in connection with Fig. 16, the fluid is forced back from the fluid transfer unit 114b, going through the U-shape pipe 161 as indicated by arrows 171, 172 into the fluid storing chamber 162.

Increasing the pressure in the fluid storing chambers 162 and 166 and releasing the pressure therefrom may occur alternately in the manner as described above, so that the portion of the fluid branched from the fluid transfer unit 114b can be transferred to the designated location through the exit port 170.

The basic principle of operation on which the fluid transfer apparatus described in this embodiment operates is the same as that for the fluid transfer apparatus described in the embodiments 1 through 2. For simplicity, this description is omitted.

As shown in Fig. 16, the fluid storing chamber 166 contains an outlet regulator means designated by 186 which has a solid cylindrical form. The outlet regulator means 186 is suspended by means of a rod 187, and is capable of movement up and down. Moving the outlet regulator means 186 regulates the amount of the fluid that can enter in the fluid storing chamber 166, thereby accurately controlling the output amount of the fluid through the exit port 170. The output regulator means 186 is not shown in Figs. 17 and 18 because those figures are only given for explaining how the fluid transfer occurs.

As described, when the pressure in the fluid storing chamber 162 is increased, the fluid portion that has existed in the U-shape pipe 161 will be forced back into the fluid transfer unit 114b. This is one of the features of the apparatus and system according to the present invention, in that the fluid transfer occurs by taking advantage of the differential pressures. By taking advantage of the differential pressure, the fluid is moving forward or backward repeatedly, and is totally advancing in the direction of the transfer. In the fluid transfer apparatus and system according to the present invention, the fluid transfer can occur without using the mechanically-operated valve that will usually produce dusts by making contact with the fluid which are introduced into the fluid. As such, there is no such risk even when the fluid is moving forward or backward. When molten metal is transferred, it may be possible to provide any thermal insulator or heater means in order to maintain the fluid at the constant temperature, but it is impossible to provide such thermal insulator or heater means in every fluid transfer unit throughout the system. Preferably, it is better to move the fluid forward or backward repeatedly during the transfer as described above. In this way, the fluid can be maintained at the constant temperature without causing a drop in the temperature.

For molten metal being transferred, the apparatus may be running under the hermetically closed environment in which the ambient air that makes contact with the fluid being transferred may be replaced by any inert gases such as nitrogen gas. This can protect the fluid against any possible oxidization that would occur if the fluid contact with the ambient air other than the inert gases.

### EXAMPLE 7

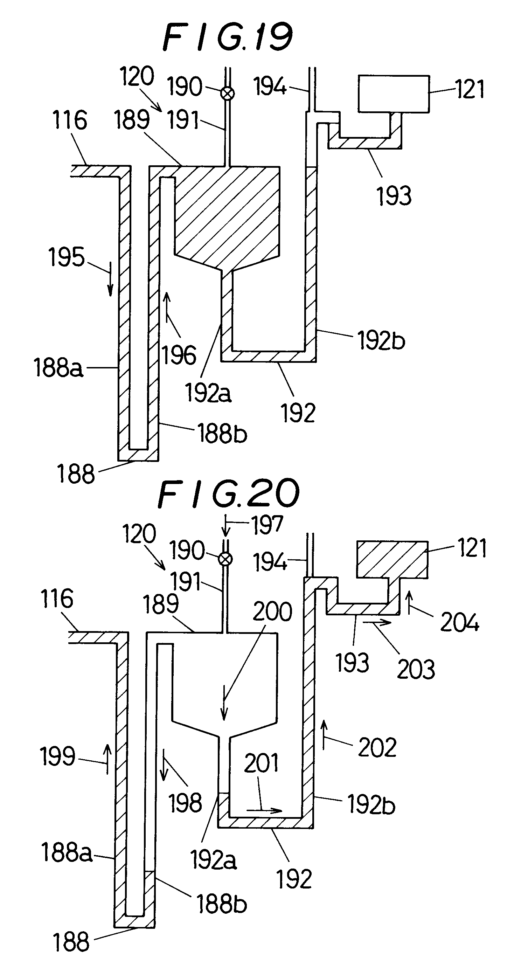

Figs. 19, 20, 21 and 22 show the fluid transfer system described in the embodiment 3 wherein the flow of the fluid branched by the fluid transfer unit 114d is transferred through the fluid transfer unit 120 to the second fluid container 121.

As seen from Fig. 19, the fluid storing chamber 189 has its upper end located below the connecting pipe of the fluid transfer unit 114d. So the flow of the fluid branched from the fluid transfer unit 114d automatically goes through the U-shape pipe 188 into the fluid storing chamber 189 as indicated by arrows 195, 196 until it fills the chamber 189. As the flow is entering the fluid storing chamber 189, the valve 190 remains open, allowing air to move through the air inlet/outlet pipe 191 freely. Also, the air through the air inlet/outlet pipe 194 is allowed to move freely. Fig. 19 shows that the fluid fills the fluid storing chamber 189.

Next, the air through the air inlet/outlet pipe 191 is drawn into the fluid storing chamber 189 as indicated by arrow 197, increasing the pressure therein (Fig. 20). During this period, the air through the air inlet/outlet pipe 194 is allowed to move freely. When the fluid storing chamber 189 is thus placed under the increased pressure, the fluid in the U-shape pipe 188 is depressed on the side of the longitudinal pipe portion 188b as indicated by an arrow 198, while the fluid in the longitudinal pipe portion 188a is raised as indicated by an arrow 199. At this point of time, the fluid is forced back into the fluid transfer unit 114d, while the fluid in the fluid storing chamber 189 is depressed as indicated by an arrow 200, and goes through the U-shape pipe 192 to the U-shape pipe 193 as indicated by arrows 201, 202, forcing the fluid portion that has remained in the U-shape pipe 193 to flow into the fluid container 121, as indicated by arrows 203, 204.

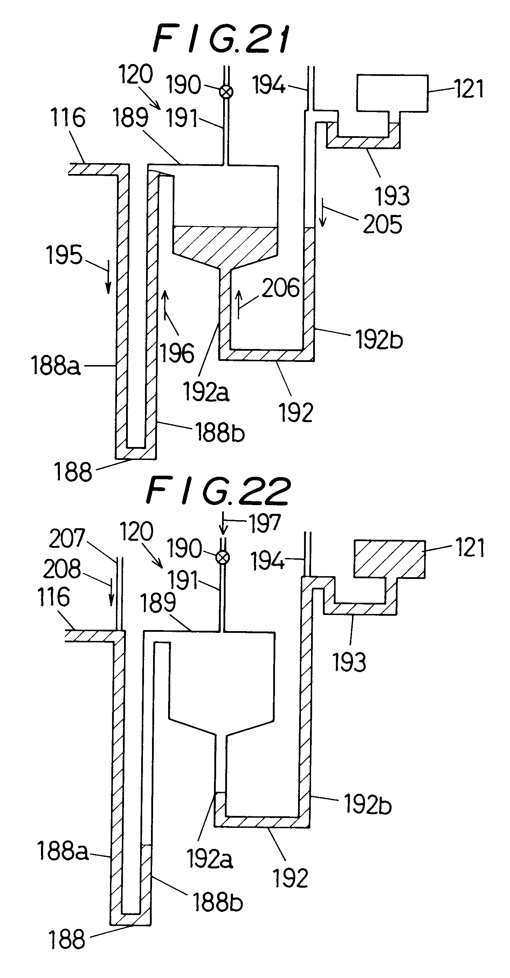

Then, the applied pressure in the fluid storing chamber 189 is released, allowing the air through the air inlet/outlet pipe 191 to move freely (Fig. 21). At this time the air through the air inlet/outlet pipe 194 moves freely, so the fluid portion existing in the longitudinal pipe portion 192b of the U-shape pipe 192 goes down through the pipe portion 192b as indicated by an arrow 205, while the fluid poriton in the opposite longitudinal pipe portion 192a rises as indicated by an arrow 206. The U-shape pipe 193 has the fluid portion remaining therein. As the air inlet/outlet pipe 194 is always open, the fluid portion in the U-shape pipe 193 can remain there even when the pressure is released from the fluid storing chamber 189. On the other hand, the fluid is forced back from the fluid transfer unit 114d, going through the U-shape pipe 188 into the fluid storing chamber 189 as indicated by arrows 195, 196. As seen from the state in Fig. 21, the pressure is released from the fluid storing chamber 189, and the valve 190 is opened to allow the air to flow into the fluid storing chamber 189 until it is in the process of being filled with the air as shown in Fig. 19.

After the fluid storing chamber 189 has been filled with the air as shown in Fig. 19, more air is drawn into the chamber 189 through the air inlet/outlet pipe 191 as indicated by an arrow 197, placing the chamber 189 under the increased pressure (Fig. 20). By increasing and releasing the pressure repeatedly in this way, the fluid transferred from the fluid transfer unit 114d may be forwarded to the designated fluid container 121.

The feature of the embodiment described above is in that the additional U-shape pipe 193 is provided in which the fluid can always reside. To allow the fluid always to reside in the U-shape pipe 193, it is necessary for the air to be drawn through the air inlet/outlet pipe 194 into the upper end of the longitudinal pipe portion 192b of the U-shape pipe 192, upon switching the fluid storing chamber 189 from the increased pressure state to the released pressure state. Otherwise, the fluid portion that exists in the U-shape 193 pipe would be going down together with the fluid portion that exists in the longitudinal pipe portion 192b, upon switching the fluid storing chamber 189 from the increased pressure state to the released pressure state. Then, to avoid this, the air inlet/outlet pipe 194 that is always open may be connected to the upper end of the longitudinal pipe portion 192b so that the air can be drawn upon switching as above. Alternatively, the air inlet/outlet pipe 194 may be replaced by an air inlet/outlet pipe with a valve, and the air may be drawn by switching the valve. When the pressure in the fluid storing chamber 189 is increased, causing the fluid to be transferred through the U-shape pipes 192, 193 into the fluid container 121, it is not important whether the longitudinal pipe portion 192b is open or closed at the upper end thereof.

By providing the U-shape pipe 193 in which the fluid can always reside as described above, the apparatus in this embodiment can provide the efficient performance in transferring molten metal, for example. The air that enters and goes out of the apparatus through the air inlet/outlet pipes 191 and 194 should be any of the inert gases such as nitrogen gas, and the molten metal should only be exposed to the atmosphere air at the exit of the U-shape pipe 193 on the side of the fluid container 121. In this case, a molding machine is in place of the fluid container 121. In this way, any possible oxidization that would occur if the molten metal should be exposed to the air in the atmosphere can conveniently be minimized. This is because that the portion of the molten metal that may be exposed to the atmosphere air only corresponds to the area in cross section of the closed exit of the U-shape pipe 193 on the side of the fluid container 121. Furhtermore, provision may be made for maintaining the molten metal being transferred at the constant temperature such as by covering the U-shape pipe 193 with a thermally insulating material or by using a heater means around the pipe 193. The molten metal which is kept at the constant temperature can be fed into the metal mold, and the improved quality products can be obtained. As noted earlier, the apparatus has the construction including the additional air inlet/outlet pipe 194, but not simply opening the upper end of the longitudinal pipe portion 192b, so that the fluid can always reside in the U-shape pipe 193. This construction is specifically intended to allow only the inert gases to flow throughout the apparatus through the pipe 193.

The apparatus shown in Fig. 22 is a variation of the apparatus described above in connection with the this embodiment that includes some improvements. As seen from Fig. 22, the apparatus includes an air inlet pipe 207 coupled with the upper end of the longitudinal pipe portion 188a of the U-shape pipe 188, and a pressure supply means (not shown) coupled with the opposite end of the air inlet pipe 207. When the air through the air inlet/outlet pipe 191 is drawn into the fluid storing chamber 189 as indicated by an arrow 197, increasing the pressure therein, the air is also drawn through the air inlet pipe 207 as indicated by an arrow 208. In this way, the chamber 189 will be placed under the higher pressures, and the fluid therein can be transferred under those higher pressures to the fluid container 121.

In the embodiment 6, the fluid transfer unit 118 is connected to the fluid transfer unit 114b, and in the embodiment 7, the fluid transfer unit 120 is connected to the fluid transfer unit 114d. It should be understood that those fluid transfer units can be interconnected in any combination other than those in the embodiments 6 and 7. For example, the fluid transfer unit 118 may be connected to the fluid transfer unit 114d, and the fluid transfer unit 120 may be connected to the fluid transfer unit 114b.

Although the present invention has been described so far with reference to the various preferred embodiments thereof, it should be appreciated that various changes and modifications may be made without departing from the spirit and scope of the invention as defined in the appended claims and as disclosed in the specification.

## Claims

1. A fluid transfer method includes:
descreasing a pressure in a fluid storing chamber which is disposed outside a fluid to be transferred by removing a gas from the fluid storing chamber through a gas inlet and outlet pipe:
drawing the fluid into the fluid storing chamber through a fluid inlet pipe having its open bottom end extending into the fluid by taking advantage of the decreased pressure in the fluid storing chamber:
increasing a pressure in the fluid storing chamber by supplying a gas into the fluid storing chamber through the gas inlet and outlet pipe: and
transferring said drawn fluid through a U-shape outlet pipe from the fluid storing chamber by taking advantage of the increased pressure in the fluid storing chamber:
characterized that:
allowing a part of said drawn fluid to remain in the U-shape outlet pipe when the pressure in the fluid storing chamber is decreased;and
allowing a part of said drawn fluid to remain in the bottom end of the fluid inlet pipe when the pressure in the fluid storing chamber is increased.

2. A fluid transfer system configured to include a plurality of fluid transfer units arranged at regular intervals, wherein each fluid transfer unit includes:
first upright pipe means having an open bottom end and an upper end;
second upright pipe means; and
connecting pipe means coupling said first upright pipe means with said second upright pipe means, and wherein said system includes:
common pressure reducing means coupled with said upper end of said first upright pipe means in each said fluid transfer unit; and
fluid delivery pipe means for connecting each one of said plurality of said fluid transfer units to another, whereby said common pressure reducing means provides a siphon action under which the fluid is transferred from said first upright pipe means to said second upright pipe means thereby allowing the fluid to be transferred toward the desired place.

3. The fluid transfer system as defined in Claim 2, wherein said system further includes a second group of fluid transfer units arranged in parallel with the first group of said fluid transfer units such that each unit in said second group is located at a fluid branch point for branching the flow of the fluid to a different destination.

4. A fluid transfer apparatus including:
a fluid storing chamber;
inlet pipe means having an open upper end extending into one lateral side of said fluid storing chamber and having an open bottom end extending into a fluid being transferred;
U-shape pipe means including a first longitudinal pipe portion having its open upper end connected to the bottom end of said fluid transfer chamber and a second longitudinal pipe portion having its open upper end connected to fluid delivery pipe means; and
air inlet/outlet means coupled with the top end of said fluid storing chamber, wherein said first longitudinal pipe portion of said U-shape pipe means coupled with said bottom end of said fluid storing chamber has a specific length in the direction of its height, and the length of said second longitudinal pipe portion of said U-shape pipe means in the direction of the height of said second longitudinal pipe portion and the length of said inlet pipe means in the direction of its height below the level of the fluid being transferred and in which said open bottom end of said inlet pipe means is extended is defined to have a specific relationship.

5. The fluid transfer apparatus as defined in Claim 4, wherein when the length in the direction of the height between the levels of the fluid drawn into said fluid storing chamber that occurs when the pressure inside said fluid storing chamber is reduced, and the fluid being transferred and in which said open bottom end of said inlet pipe means is extended is given as L2, the length L3 of said first longitudinal pipe portion of said U-shape pipe means coupled with said bottom end of said fluid storing chamber has to satisfy the relation of L2 < L3.

6. The fluid transfer apparatus as defined in Claim 4, wherein when the difference in the direction of the height between the levels of the fluids in said first and second longitudinal pipe portions of said U-shape pipe means that occur when the pressure inside said fluid storing chamber is increased is given as L4, said specific relationship between the length of said second longitudinal pipe portion of said U-shape pipe means in the direction of the height of said second longitudinal pipe portion and the length of said inlet pipe means in the direction of its height below the level of the fluid being transferred and in which said open bottom end of said inlet pipe means is extended is defined such that said length of said second inlet pipe means in the direction of its height below the level of the fluid is more than L4.

7. A fluid transfer apparatus comprising a plurality of fluid transfer units arranged at regular intervals, each unit including:
first upright pipe means having an open bottom end and having an upper end connected to pressure reducing means;
second upright pipe means; and
connecting pipe means coupling said first upright pipe means with said second upright pipe means, and wherein said fluid transfer apparatus further includes fluid delivery pipe means for connecting each one of said plurality of fluid transfer units to another.

8. The fluid transfer apparatus as defined in Claim 10, further including a second group of fluid transfer units arranged in parallel with a specific one or ones of said plurality of fluid transfer units, and fluid flow branching pipe means coupled with said second group of fluid transfer units.

9. A fluid transfer apparatus including:
a fluid storing chamber;
pressure supply means connected to the upper end of said fluid storing chamber;
first U-shape pipe means having first open upper end coupled with fluid delivery pipe means and having second open upper end extending into the lateral side of said fluid storing chamber; and
second U-shape pipe means having first open upper end coupled with the bottom end of said fluid storing chamber and having second open upper end connected with a fluid container, and wherein said fluid transfer apparatus further includes third U-shape pipe means interposed between said second U-shape pipe means and said fluid container, and air inlet/outlet pipe means coupled with the connection between said third U-shape pipe means and said second U-shape pipe means.
